# EUROPEAN PATENT APPLICATION

(11) **EP 3 461 726 A1**
(43) Date of publication of application: **03.04.2019**
(21) Application number: 17194272.5
(22) Date of filing: 30.09.2017
(51) Int. Cl.: B62J 6/12

(54) **CONNECTED DYNAMO**

(71) Applicant: Comodule Oü, 10148 Tallinn (EE)
(72) Inventor: MARUSTE, Kristjan, 10148 Tallinn (EE); PRAKS, Teet, 10148 Tallinn (EE); VARIK, Heigo, 10148 Tallinn (EE); PARTS, Sander, 10148 Tallinn (EE); STENNIKOV, Aleksandr, 10148 Tallinn (EE)
(74) Representative: Sarap, Margus

(57) **Abstract**

The connected dynamo comprises a power generating device, programmable electronics unit (controller) and a communication device (telematics unit), wherein the connected dynamo is assembled in one unibody design together with the wheel hub i.e. hub dynamo and connected to connectivity device.

## Description

### Technical field

The present invention belongs to the field of bicycle dynamos, more specifically to the field of smart dynamos.

### Prior art of the invention

Different bicycle dynamos are known from prior art to generate electrical current for external bicycle parts, such as powering lights or charging mobile phone. The problem of known dynamos is that the dynamos doesn't include any other functionalities than generating current.

### Summary of the invention

The aim of the present invention is to integrate power generating device for 2 - wheel vehicles, preferably for bicycles, telematics unit and programmable electronics into unibody housing to provide the users smart functionalities.

The aim of the present invention is achieved by the dynamo wherein power generating device, programmable electronics unit and telematics device has been integrated into unibody housing in bicycle wheel hub to gather usage data from wireless or wired sensors (for example heart rate, speed, cadence, power meter, gear position, accelerometer, gyroscope) and power telematics unit.

The present invention combines electrical generator and smart electronics device in one unibody housing which eliminates the need to wire smart electronics separately on the bicycle.

In the present invention the working principle of smart bicycle dynamo which combines electrical generator, telematics unit and programmable electronics integrated into one housing which acts as bicycle wheel hub is used. Electrical generator attached to the bicycle wheel generates electrical current for the telematics unit and programmable electronics which is capable to gather and process usage data (from sensors and different bike parts) and transmit this to the cloud (via cellular networks) and smart devices (via Bluetooth or ANT+).

The present invention enables simple integration of smart digital features on the bicycle. Such smart functionalities enable for example consumers to track & trace bicycle in case it's stolen; consumers to track its activity and share with friends through social channels; bicycle manufacturers to use given data for product development decisions; bicycle manufacturers to use given data to tailor marketing message; bicycle dealers to monitor state of the bicycle for service purposes. etc.

The present invention solves following problems known from prior art. Integration effort of telematics device on the bicycle is solved by bicycle hub which is standardized bicycle part (same size, same location) on every bike.

Powering method of smart communication electronics = otherwise smart communication electronics would require consistent charging from power grid by consumer.

Given device can be used as central part of device to gather data: electrical shifters, control lights, smart locks etc.

The connected dynamo according to present invention enables to make bicycle ready for free-floating sharing networks.

### Description of the drawings

The invention is described in more detail with references to the following figures wherein:
Fig 1 illustrates the cross-section view of the connected dynamo according to the present invention;

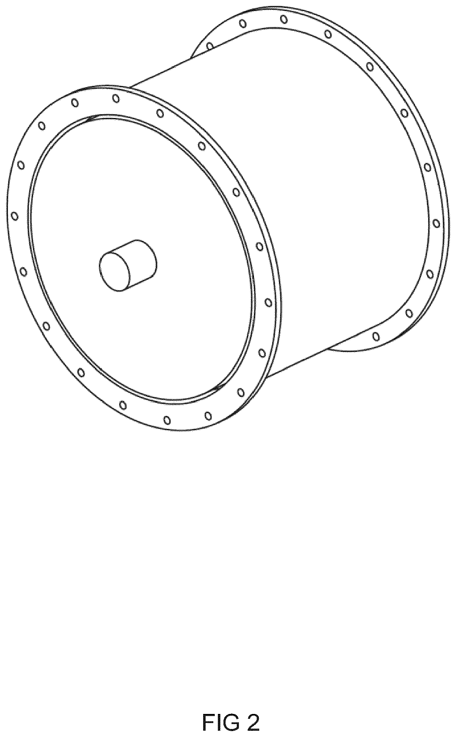

Fig 2 illustrates the connected dynamo in isometric view;

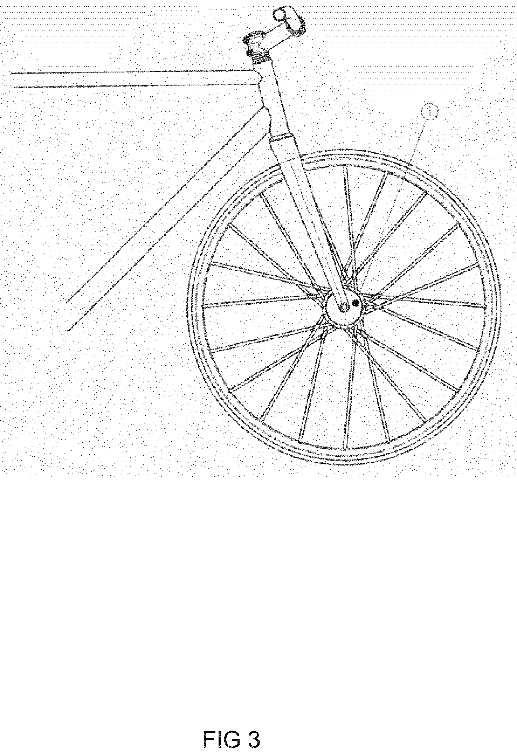

Fig 3 shows the connected dynamo assembled together with the wheel;
Fig 4 illustrates connected dynamo according connected to the network.

### Detailed description of the invention

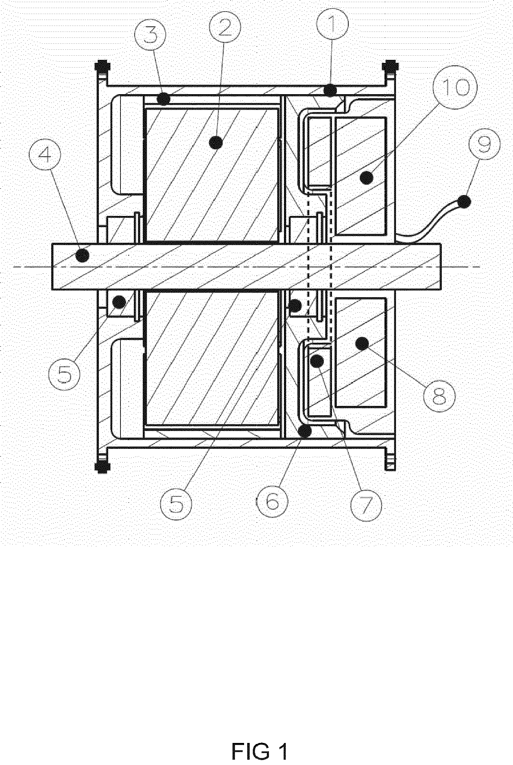

The connected dynamo according to the present invention comprises a power generating device, programmable electronics unit (controller) and a communication device (telematics unit), wherein the connected dynamo is assembled in one unibody design together with the wheel hub i.e. hub dynamo and connected to connectivity device. The construction of the present invention is shown more specifically in fig 1.

Fig 1 describes the connected dynamo according to the present invention, wherein the dynamo in built around the central axle (4). The stator (2) with permanent magnets (3) is connected directly to the axle (4) and together act as static elements. The rotor (1) together with the outer casing (6) and components is rested on the wheel bearings (5) and rotates together with the bicycle wheel around the axle (4) and stator (2). The electronics (7;8;10) are integrated inside the same unibody casing. The connectivity unit (10) also includes antennas for short and long-range communication.

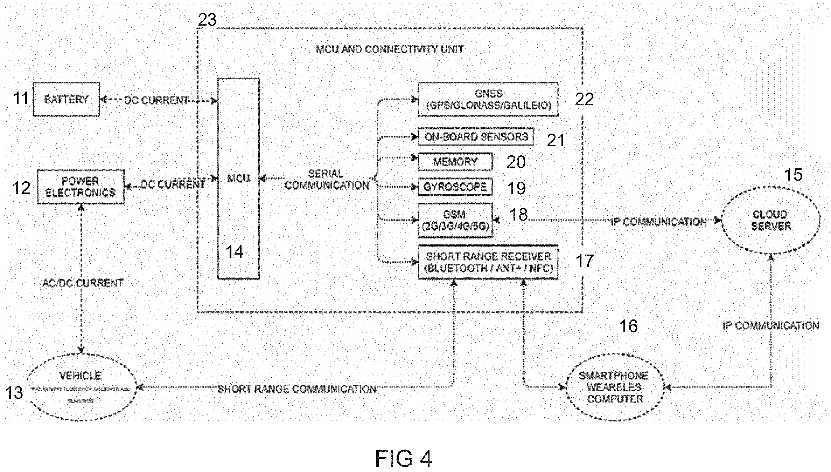

In Fig 4 the MCU and connectivity unit (23) gets it power from the power electronics (12) which also supply the vehicle (13) and its subsystems. Additionally there might be a battery (11) used to manage peak consumption. The battery (11) is connected through the MCU (14). The MCU (14) connects through serial communication to communication modems (18;17); positioning module (22); memory chip (20) on which data is stored; on-board sensors (21) and gyroscope (19). The long range communication unit (18) gathers recieves data from the MCU and sends this over IP communication to outside cloud server (15). The short range unit (17) sends data to outside components (16).

The dynamo generates electricity from the rotational movement. This energy is used to power the controller and connectivity device but it is also supplied for external bike components such as lights. The generated power can be direct or alternating current and with variable voltage levels. The power management and modification can happen outside the unit or in the integrated controller unit.

The controller unit has a programmable control unit (MCU). The MCU gathers data and analysis data received from the connectivity unit. Additionally, the MCU can detect wheel rotations and other environmental changes from sensors connected to the MCU.

The connectivity unit connects to local sensors on vehicles and to external devices. The connectivity unit may use different radio frequencies for communication. For low-range communications to external sensors and mobile devices different communications options can be used such as ANT+, Bluetooth, NFC, WIFI . For long-range communication, the unit communicates with GSM technology (2G, 3G, 4G inc NB IoT, 5G) or low-power solutions such as LORA or Sligfox.

To manage power consumption and also provide power when not in movement an internal battery may be used to power the system. The battery is managed by the MCU and can be recharged using the rotational energy from the dynamo.

The connectivity unit connects to vehicle user wearable devices such as smartphones or smartwatches but can also connect to other devices such as laptop computers. Data from the device is sent to a server ecosystem / database directly using long-range communication or indirectly through the users devices.

The connectivity unit also allows to connect with 3rd party devices: electrical shifters, smart locks, road infrastructure, other bikes, smart helmets: therefore acts as central part of bicycle.

## Claims

1. A connected dynamo comprising a power generating device, a programmable electronics unit such as controller (13) and a communication device such as telematics unit (18), wherein the connected dynamo is assembled in one unibody design together with a wheel hub, **characterized by** that power generating device is connected to connectivity device and the power generating device is built around a central axle (4) of bicycle wheel, comprising a stator (2) with permanent magnets (3) connected directly to the central axle (4) and together act as static elements and a rotor (1) together with an outer casing (6) and components is rested on a wheel bearings (5) rotating together with the bicycle wheel around the central axle (4) and the stator (2), the electronics (7;8;10) are integrated inside the same unibody outer casing, and the connectivity unit (10) also includes antennas for short and long-range communication.
